# FASCICULE DE BREVET EUROPEEN

(11) **EP 0 641 061 B1**
(45) Date de publication et mention de la délivrance du brevet: **21.01.1998**
(21) Numéro de dépôt: 94117990.5
(22) Date de dépôt: 22.09.1993
(51) Int. Cl.: H02K 7/09, H02K 26/00, H01F 7/14, F16C 39/06

(54) **Dispositif à palier magnétique pour le basculement d'un corps tournant par rapport à un corps statorique**
Magnetische Lagervorrichtung für das Kippen eines Drehkörpers in Bezug auf einen Ständerkörper
Magnetic bearing device for tipping a rotating body with respect to a stator body

(30) Priorité: 22.09.1992 FR 9211262
(43) Date de publication de la demande: 01.03.1995
(62) Demande divisionnaire de: 93920918.5
(73) Titulaire: AEROSPATIALE Société Nationale Industrielle, 75781 Paris Cédex 16 (FR)
(72) Inventeur: Bernus,Christophe, F-75018 Paris (FR); Jamain, Patrice, F-78580 Maule (FR); Roland, Jean-Pierre, F-95510 Vienne en Arthie (FR)
(74) Mandataire: Rinuy, Santarelli

(56) Documents cités:
- WO-A-84/00198
- US-A- 4 732 353

## Description

L'invention concerne le positionnement en basculement de l'arbre d'un corps mobile, tournant avec un débattement angulaire limité, typiquement inférieur à 180°, par rapport à un corps fixe. Le corps est par exemple un miroir de balayage (voire un support d'antenne, un filtre, une lentille, etc...) de préférence mais non exclusivement dans le domaine spatial.

Elle a pour objet un dispositif de positionnement de l'arbre d'un corps tournant, par exemple un miroir de balayage éventuellement embarqué sur un satellite d'observation, qui puisse commander un faible basculement de l'axe de rotation (typiquement de l'ordre du milliradian) tout en étant à faible niveau de vibrations en service et sans frottement, précis, stable et fiable, le tout dans un environnement éventuellement spatial.

Pour ce faire, l'invention tire profit des entrefers radiaux des paliers magnétiques dans lesquels est monté l'arbre pour autoriser un basculement de cet arbre, minime, certes, mais en pratique suffisant, par exemple pour compenser l'avance sur son orbite d'un satellite sur lequel est embarqué un dispositif de commande en débattement angulaire portant un miroir de balayage d'axe parallèle à l'orbite. Ce basculement est commandé par modification de la consigne de position de l'arbre dans l'un au moins de ses paliers magnétiques, lesquels sont choisis en sorte d'avoir au moins un axe radial actif (transversal à l'axe autour duquel on cherche à avoir un basculement).

L'invention propose à cet effet un dispositif tel que défini à la revendication 1.

On connaît déjà des systèmes pour corps tournants dans lesquels un basculement intervient à la faveur des entrefers radiaux d'un palier magnétique.

Ainsi le document WO-84 00 198 (LANGE) décrit un ensemble de deux paliers décalés axialement dans lesquels est monté l'arbre d'un corps tournant dont un cherche à amortir les mouvements de nutation. Un circuit de commande agit sur les bobinages des paliers en sorte de rappeler l'arbre de rotation dans une position de consigne fixe.

Quant au document US-4.732.353 (STUDER) il décrit un système de contrôle d'attitude 3-axes, comportant un palier unique d'un type très particulier, très compact axialement, à trois étages agissant sur la jupe périphérique d'une roue d'inertie. Ce palier très spécifique est adapté à appliquer des couples de basculement par action sur cette jupe.

Toutefois aucun de ces documents ne décrit ou ne suggère, à propos d'un corps tournant avec un débattement angulaire limité, l'intérêt de pouvoir provoquer un faible basculement, typiquement de l'ordre du milliradian, et de provoquer ce basculement par application d'une consigne radiale variable à l'un au moins de deux paliers magnétiques décalés axialement.

De manière préférée :
- les deux paliers magnétiques ont des axes radialement actifs qui sont parallèles,
- on profite de l'écartement axial des paliers magnétiques pour loger entré ceux-ci un équipement électromagnétique tel qu'un moteur adapté à la commande en rotation du corps tournant dans son débattement limité, ou un dispositif de verrouillage en position de l'arbre de ce corps tournant, notamment,
- une charge utile telle qu'un miroir de balayage est montée en porte-à-faux sur cet arbre.

Des objets, caractéristiques et avantages de l'invention ressortent de la description qui suit, donnée à titre d'exemple non limitatif, en regard des dessins annexés sur lesquels :
- la figure 1 est une vue schématique en coupe axiale d'un dispositif de commande en débattement angulaire ;
- la figure 2 est une vue en coupe axiale du palier magnétique de la figure 1 ;
- la figure 3 est une vue en coupe transversale du moteur de la figure 1 ;
- la figure 4 est une vue en perspective de la partie statorique (ici l'induit) de ce moteur ;
- la figure 5 est une vue partielle transversale du dispositif de verrouillage, selon la ligne V-V de la figure 1 ;
- la figure 6 est une autre vue partielle de ce dispositif de verrouillage, selon la ligne VI-VI de la figure 1 ;
- la figure 7 est une vue agrandie du moteur du dispositif de verrouillage, pris isolément ;
- la figure 8 est une vue en coupe de la partie statorique du moteur de la figure 7, selon la ligne VIII-VIII de cette figure 7 ;
- la figure 9 est une vue en coupe transversale du disque mobile de ce moteur (ici son induit) selon la ligne IX-IX de la figure 7 ; et
- la figure 10 est un schéma de principe de l'électronique de commande du dispositif de la figure 1.

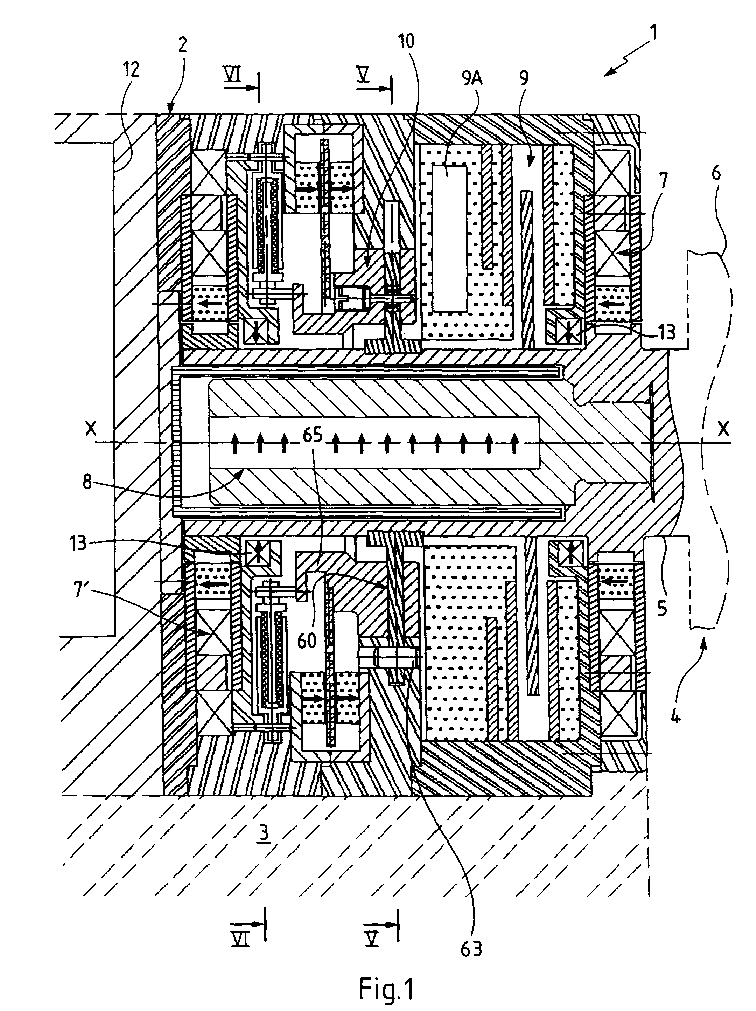

La figure 1 représente, sous la référence générale 1, un dispositif de commande en débattement angulaire comportant une partie statorique 2, destinée à être fixée à un support 3, par exemple un satellite suivant une orbite terrestre, et une partie rotorique 4, montée rotative vis à vis de la partie statorique 2 autour d'un axe X-X, par exemple parallèle à l'orbite précitée, comportant un arbre 5 et une portion utile 6 telle qu'un miroir de balayage.

Ce dispositif 1 est formé principalement de paliers 7 et 7', d'un moteur 8, d'un éventuel résolveur angulaire 9, d'un dispositif de verrouillage 10 (avantageusement disposé axialement entre les paliers, ce qui améliore le maintien de l'arbre), d'un dispositif de commande en basculement, et d'un bloc électronique 12 contrôlant le fonctionnement des divers composants du dispositif 1. La référence 13 désigne des capteurs de position radiale servant au fonctionnement des paliers 7 et 7'.

Les paliers 7 et 7' sont du type magnétique actif, de manière à s'affranchir de tout frottement et de tous les inconvénients habituellement associés au frottement (vibrations, phénomène d'hystérésis en cas d'inversion du sens de mouvement, etc...) et qui seraient préjudiciables à une bonne précision angulaire. Il sont ici identiques l'un à l'autre.

Le dispositif de commande en basculement, selon un aspect original en soi, profite du débattement axial ou radial qui existe dans un palier magnétique entre rotor et stator pour induire un basculement soit par déplacement radial de la partie rotorique du palier, soit par actions axiales de sens contraires en deux zones diamétralement opposées de cette partie rotorique.

Le moteur 8 est à débattement angulaire limité pouvant ici approcher (sans l'atteindre) la valeur de 180° ; il a une conformation très allongée sur l'axe ce qui lui confère un encombrement radial bien plus faible que les moteurs connus, combiné à une très faible inertie en rotation autour de l'axe X-X.

Sa commande en asservissement fait ici intervenir le résolveur angulaire 9 qui sert à détecter la position angulaire de la partie rotorique 4 par rapport à la partie statorique. Ce résolveur est de tout type connu approprié, par exemple magnétique ou optique.

Le dispositif de verrouillage 10 a ceci d'original en soi qu'il s'agit d'un système mécanique réversible du type pince de serrage auto-centrée, ce qui permet de s'affranchir des inconvénients des solutions pyrotechniques (notamment pollution, caractère mono-coup, reproductibilité de fabrication insuffisamment contrôlée, sécurité insuffisante en cas de présence humaine) et permet au sol des essais complets avec plusieurs verrouillages et déverrouillages.

Les divers étages précités sont détaillés ci-dessous.

Diverses valeurs numériques seront données (pour préciser l'exemple considéré ici), correspondant aux spécifications suivantes pour un système de balayage optique embarqué sur satellite :
- précision de visée : 0,25*10⁻³ rad mécaniques
- stabilité sur 150 ms : 0,085*10⁻³ rad mécaniques
- débattement maximum : 113,925°
- couple perturbateur induit par réaction : 6*10⁻²N.m
- temps de transition entre deux positions de visée décalées de 1.65° mécanique : 66 ms
- masse mécanique : < 4 kg
- amplitude de basculement : 1,38*10⁻³ rad
- tension d'alimentation : 22-37 V
- durée de vie : 4 ans (stockage) + 5 ans (service)

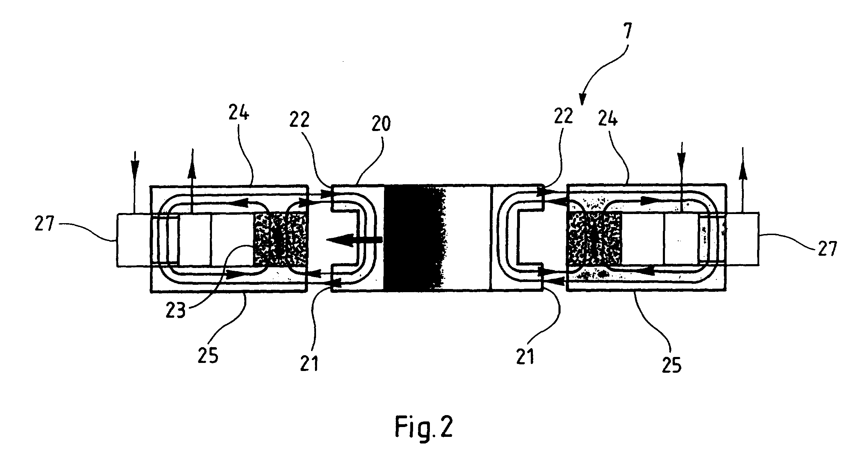

Ainsi tout d'abord la structure et le fonctionnement du palier magnétique 7 ou 7' sont représentés à la figure 2.

Le palier magnétique 7 (ou 7') est d'un type classique, connu en soi d'après le brevet français 87-03489 ou US-4.918.345 (VAILLANT DE GUELIS et al.)

Ce palier 7 est ici du type à deux axes transversaux asservis (on parle parfois de palier à contrôle radial actif et à contrôle axial passif). Cette solution est notamment intéressante pour des raisons de faible encombrement axial. En l'absence de cette contrainte on peut préférer un palier à contrôle radial passif et à contrôle axial actif ce qui présente des avantages de simplicité du point de vue électronique.

Il est rappelé ici qu'un système de suspension magnétique ne peut jamais être complètement passif car on peut démontrer qu'il y a toujours au moins un degré de liberté suivant lequel la partie suspendue (rotor) est dans un état d'équilibre instable (c'est-à-dire que la suspension a suivant ce degré de liberté une raideur négative), ce qui impose la mise en oeuvre pour ce degré de liberté d'une boucle active à actionneurs du type bobines.

Comme cela sera mentionné ci-dessous, le fait que le palier 7 ou 7' soit à contrôle radial actif a pour avantage de permettre, en modifiant les consignes d'asservissement, de commander le basculement de l'axe X-X de l'arbre.

Ainsi que cela ressort de la figure 2, ce palier comporte, du côté partie rotorique, une simple couronne polaire ferromagnétique 20 munie de nervures annulaires 21 et 22 tandis que ce palier comporte, du côté statorique, une couronne 23 d'aimants permanents à aimantation axiale, pris axialement en sandwich entre deux pièces polaires plates annulaires 24 et 25 définissant des entrefers avec les nervures 21 et 22 et enserrant par ailleurs deux paires (une seule est visible) de noyaux axiaux 26 diamétralement opposés, ces paires étant décalées de 90° et ces noyaux étant entourés de bobines 27. Dans les pièces polaires sont avantageusement prévues des fentes radiales (non visibles) alternant circonférentiellement avec les ensembles noyau/bobine et visant à empêcher (de façon connue) les fuites magnétiques d'une bobine vers l'autre. A chaque axe d'asservissement radial (il y en a ici deux) sont associées deux bobines diamétralement opposées, connectées électriquement l'une à l'autre pour former un circuit indépendant de celui de l'autre axe.

Dans ce type de palier, le rotor est rappelé passivement s'il se déplace axialement ou s'il bascule suivant un axe perpendiculaire à l'axe X-X.

On appréciera que les bobines et les aimants mélangent leurs flux. Les aimants permanents de la couronne 20 produisent un flux principal statique tandis que les bobines, lorsqu'elles sont excitées par un courant de sens donné, génèrent un flux additionnel qui sert à moduler le flux permanent ou statique existant dans les entrefers et donc à augmenter d'un côté (à la figure 2, à gauche) et diminuer de l'autre côté (à la figure 2, à droite) la force radiale appliquée à la partie suspendue et donc appliquer à cette dernière une force radiale de sens et d'amplitude propre à ramener cette partie suspendue en sa position d'équilibre. Il suffit d'inverser le courant dans les bobines pour générer une force contraire. Bien sûr les bobines associées à un même axe sont montées et alimentées en sorte d'appliquer toujours des forces de même sens. Un avantage de cette disposition est d'offrir une caractéristique effort/courant qui est quasi-linéaire : cela permet l'emploi, dans le bloc électronique, de simples amplificateurs linéaires.

On appréciera que ce palier permet une très faible inertie en rotation puisque l'essentiel des éléments constitutifs des paliers est porté par leur partie statorique.

Outre l'absence de frottement (augmentant la durée de vie) et de "bruit de frottement" (améliorant la précision angulaire), ce palier à aimants permanents présente les avantages suivants :
- encombrement très réduit,
- consommation permanente quasi nulle en l'absence de perturbation vibratoire,
- raideurs radiale, axiale et en basculement largement suffisantes pour l'application envisagée.

Un exemple de dimensionnement du palier 7 (ou 7') est le suivant :
- diamètre moyen du rotor du palier : 47 mm
- entrefers : 0,60 mm
- inertie de rotation des deux rotors : 7,1*10⁻⁶ kg.m²
- masse d'aimants : 70 g
- raideurs (par palier) : axiale : 20 N/mm radiale : 100 N/mm
- jeu radial de butée (au rayon) : 0,20 mm
- actionneur :
   . nombre de spires : 170
   . diamètre de fil : 0,6 mm
   . intensité de décollage sous 1g et pour 0,2 mm (pire cas, lors des essais sol) de décalage initial : 2 A
   . tension mini de décollage : 5 V

Il est à noter que lors d'essais au sol, si l'ensemble est disposé suivant un axe vertical, la boucle d'asservissement radial ne nécessite pas plus de puissance électrique qu'en vol : le poids de l'ensemble suspendu n'influe pas sur la position radiale du rotor. Cependant les tension et courant de décollage indiqués ci-dessus ont été dimensionnés de manière à pouvoir faire fonctionner le palier au sol quelle que soit sa position ; toutefois seule la position verticale avec compensation du poids par un dispositif axial (contrepoids sur poulie) est représentative du fonctionnement en apesanteur.

En variante non représentée, les paliers magnétiques peuvent être du type décrit notamment dans le brevet US-4.470.644 (WEISSER) comportant une couronne d'aimants solidaire du rotor.

L'asservissement est réalisé à partir des informations données par les capteurs 13 de position radiale du rotor (deux capteurs par axe asservi). Les paliers magnétiques 7 et 7' peuvent utiliser indifféremment des capteurs de vitesse ou bien des capteurs de déplacement (il est à la portée de l'homme de métier d'adapter le bloc électronique en conséquence).

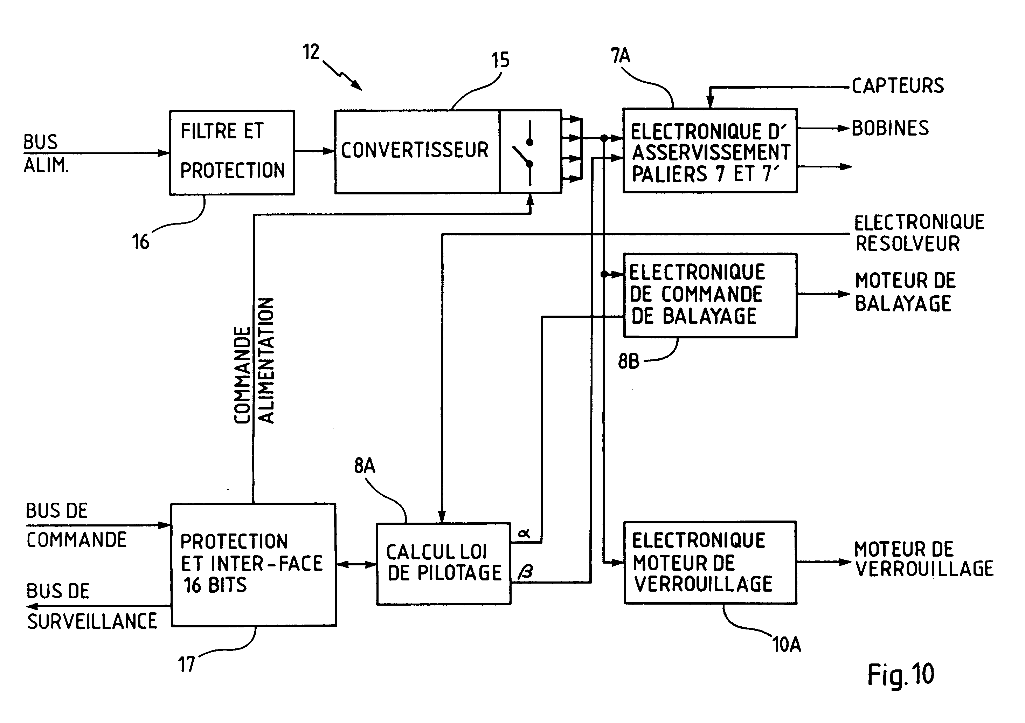

La stabilité du rotor en lévitation magnétique est assurée par deux chaines d'asservissement identiques pilotant chacune un axe, représentées conjointement sous la référence 7A à la figure 10. Chaque chaine comporte trois fonctions :
- un étage de traitement du signal d'entrée,
- un étage de correction,
- un étage d'amplification.

Seules les fonctions génération de la fréquence porteuse 50 kHz des capteurs de position sont communes.

Cette électronique reçoit en entrée un signal image de la position du rotor ; celui-ci est traité via un correcteur qui assure la fonction de transfert nécessaire à la stabilité de l'asservissement. Un amplificateur de puissance assure l'interface avec le palier.

Le décollage radial du rotor à partir d'une position en butée s'effectue automatiquement sans adjonction d'une fonction supplémentaire. Seule la présence de la tension d'asservissement permet le décollage du rotor par rapport à sa position en butée.

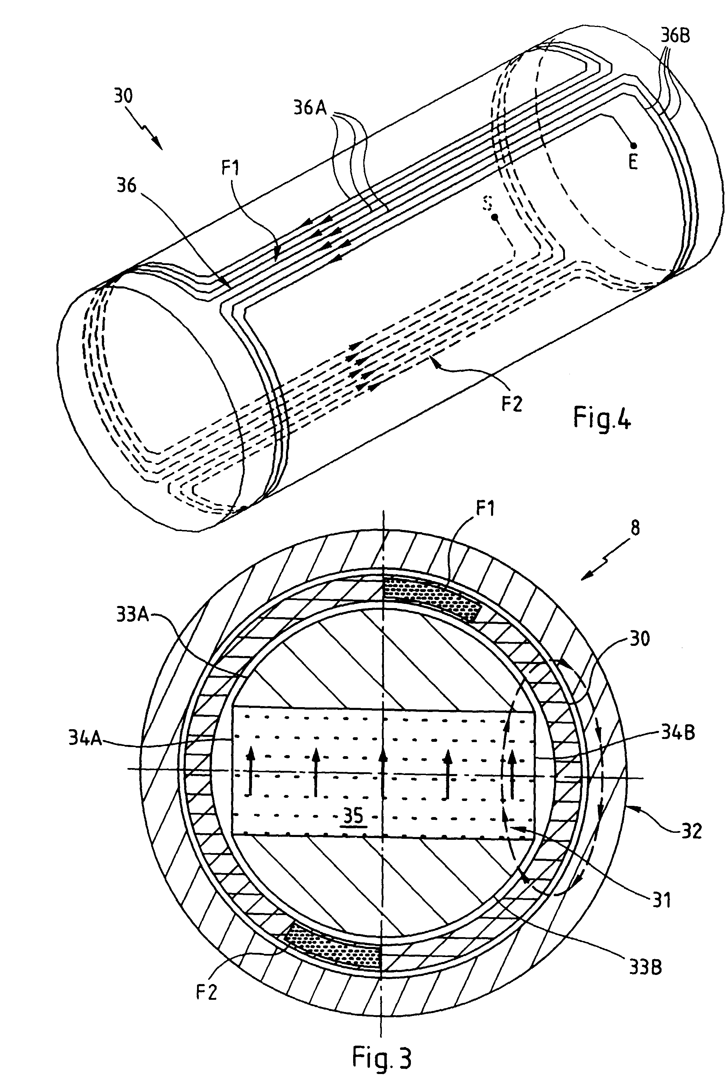

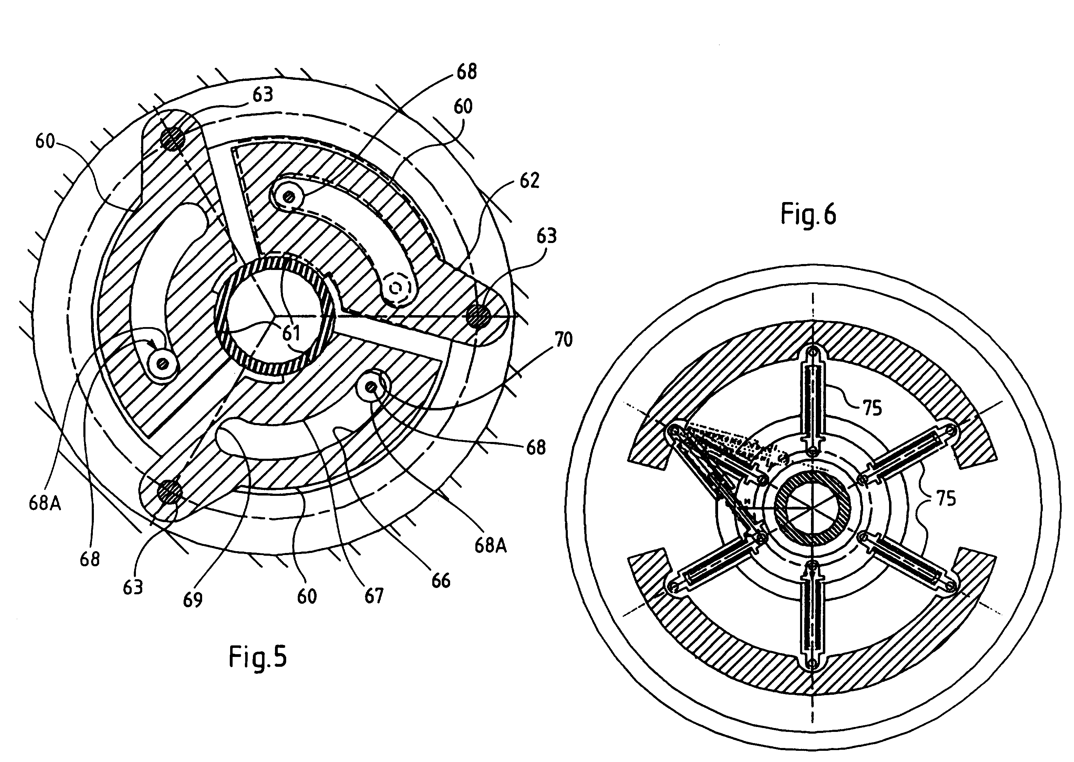

Tel que représenté aux figures 3 et 4, le moteur 8 servant à commander le déplacement angulaire de la partie rotorique 4 est un moteur couple, à débattement limité à environ 120°, qui est entièrement situé à l'intérieur de l'encombrement radial de l'arbre 5.

Plus précisément, ce moteur couple 8 comporte, du côté stator, un induit tubulaire 30 et, du côté rotor, un inducteur composé d'un barreau central 31 s'étendant axialement à l'intérieur de l'induit tubulaire et d'une portion tubulaire ferromagnétique 32 s'étendant tout autour de l'induit tubulaire 30.

On appréciera à la figure 1 que c'est également sur cette portion tubulaire ferromagnétique 32 que sont ménagées les nervures ferromagnétiques des paliers magnétiques 7 et 7'.

Entre l'induit tubulaire 30 et la portion rotorique tubulaire 32 est ménagé un entrefer annulaire de dimension radiale normalement constante ; en effet la surface extérieure de l'induit et la surface intérieure de la portion tubulaire sont cylindriques. Par contre, la surface extérieure du barreau central 31 est formée de deux portions d'un même cylindre 33A et 33B d'amplitudes angulaires sensiblement égales inférieures à 180° (par exemple 150°) diamétralement opposées et séparées par deux méplats longitudinaux 34A et 34B (ici plans et parallèles) grâce à quoi les deux portions cylindriques 33A et 33B définissent avec l'induit deux entrefers de dimension radiale très inférieure à la distance radiale moyenne entre les méplats et cet inducteur. En variante non représentée, ces méplats sont convexes ou plutôt concaves.

Dans ce barreau central 31 est disposé un barreau à aimantation permanente 35 dont le sens d'aimantation est orienté transversalement à l'axe et parallèlement aux méplats en sorte de générer un flux magnétique depuis l'une des portions cylindriques vers l'autre. Ce flux quitte l'une des portions cylindriques et traverse radialement l'induit jusqu'à la portion tubulaire ferromagnétique puis circule circonférentiellement dans celle-ci pour repénétrer dans le barreau central par l'autre portion cylindrique. Une ligne de flux est représentée à titre d'exemple.

Le barreau à aimantation permanente s'étend avantageusement sur toute la largeur du barreau central entre les méplats de sorte que le barreau central se compose d'un barreau aimanté séparant deux pièces polaires.

Ainsi que cela est représenté à la figure 4, l'induit comporte au moins un bobinage 36.

Chaque bobinage 36 comporte des brins longitudinaux parallèles disjoints 36A (leur écartement a été exagéré à la figure 4 pour des raisons de clarté) raccordés par des brins 36B disposés transversalement à l'axe, ici en arcs de cercle tels que les brins soient tous en série entre une borne d'entrée E et une borne de sortie S. Les brins longitudinaux sont répartis en deux faisceaux F1 et F2 diamétralement opposés, d'amplitude angulaire inférieure à celle des portions cylindriques du barreau central, par exemple ici de l'ordre de 20°. Tous les brins d'un même faisceau sont, lorsqu'un courant est appliqué entre les bornes E et S, parcourus par des courants de même sens.

Ces faisceaux sont disposés sur l'induit en sorte d'être en regard des portions cylindriques du barreau central. De la sorte, dès qu'un courant est appliqué dans un sens ou dans l'autre entre les bornes E et S, l'interaction de ce courant circulant dans les brins longitudinaux avec les flux magnétiques traversant l'induit génère un couple sur le barreau. Le débattement angulaire de l'inducteur vaut ainsi au maximum sensiblement la différence entre les amptitudes angulaires des faisceaux de l'induit et des portions cylindriques du barreau central.

On appréciera que les courants circulant dans les brins transversaux n'induisent aucun couple.

De préférence ces brins transversaux sont disposés axialement à l'écart du barreau central à aimantation permanente. En d'autres termes, ce barreau central est avantageusement plus court que les brins longitudinaux (on évite ainsi l'apparition d'efforts coaxiaux).

On appréciera que, bien que les matériaux à aimantation permanente soient généralement de poids spécifique élevé, cela a selon l'invention une faible incidence sur l'inertie en rotation de l'équipage mobile puisque le barreau aimanté est disposé suivant l'axe de rotation.

Le bobinage 36 peut être réalisé par dépôt de pistes, selon la technologie des circuits imprimés, auquel cas l'induit peut comporter plusieurs bobinages 36 ménagés en des couches de circuit imprimé radialement superposées et isolées électriquement les unes des autres, l'entrée de chaque bobinage étant toutefois connectée à la sortie du précédent, de manière à ce que ces bobinages soient en série, et les faisceaux analogues des divers bobinages étant respectivement superposés radialement en sorte d'ajouter et non soustraire les couples générés par les faisceaux voisins.

Toutefois, ainsi que cela ressort de la figure 3, le bobinage peut être formé de fils tels que les brins des faisceaux soient des fils conducteurs répartis sur l'épaisseur de l'induit tubulaire.

La configuration du moteur 8 permet ainsi d'obtenir des couples importants avec des induits de faible inertie de rotation ; de plus elle présente l'avantage de fournir un couple constant (donc sans ondulation) pour une intensité donnée sur tout son débattement angulaire, soit environ ici 130° ce qui ne pourrait être obtenu de façon fiable avec un moteur synchrone ou un moteur à commutation entre plusieurs paires de pôles. Un autre avantage fondamental de ce moteur 8 est l'absence d'effort magnétique divergent (raideur négative), ce qui permet son utilisation couplée avec un palier magnétique sans problème supplémentaire de stabilité à résoudre.

A titre d'exemple, les caractéristiques principales de ce moteur sont :
- diamètre moyen du bobinage stator (induit) : 28,5 mm
- épaisseur du tube statorique : 2,2 mm
- induction dans l'entrefer : 0,3 T
- résistance du bobinage : 2,3 Ohms
- inertie du rotor (aimant + tube central) : 6,46*10⁻⁶ kg.m²
- couple maximum : 6*10⁻² N.m
- intensité pour le couple max. : 2 A
- puissance dissipée à Imax : 9 W

Deux technologies (connues en soi) de détection de position angulaire sont possibles pour obtenir la précision angulaire demandée :
- résolveur optique 9 (cas représenté ici) : composé d'un disque de verre gravé, et de plusieurs paires d'émetteur (diode optique) - récepteur (non représentées) décalés d'un quart de pas de gravure pour connaître le sens de rotation et améliorer la précision du résolveur. Un inconvénient possible de ce type de résolveur est le très petit jeu nécessaire entre le disque d'une part, et les émetteurs-récepteurs d'autre part (quelques dizaines de microns). Par contre l'électronique référence 9A à la figure 1 est assez simple. Ce type de décodeur fonctionne en relatif (incrémentation - décrémentation) et nécessite un repère pour la position zéro.
- résolveur magnétique à reluctance variable (cas non représenté) composé d'une partie tournante liée à l'arbre et avantageusement formée de deux couronnes dentées décalées à la fois axialement et radialement (de la moitié de l'écart angulaire entre les dents des couronnes - il y en a par exemple 32 de sorte que le décalage radial est 5,625° - pour connaître le sens de rotation) et d'une partie fixe composée elle aussi de deux couronnes dentées mais dont les dents sont entourées de bobinages. Une tension alternative sinusoïdale est injectée dans les bobines de chaque couronne de la partie fixe (toutes les bobines sont en série) et le courant de sortie retrace la reluctance du circuit magnétique ainsi formé : reluctance faible pour les dents en face les unes des autres, et forte lorsque les dents d'une couronne sont en face des creux de l'autre couronne. La forme des dents est étudiée pour avoir un signal de sortie sinusoïdal pour un pas polaire : une électronique de traitement appropriée (résolveur synchrodigital) permet ensuite de connaître précisément la position angulaire sur un pas polaire. Ce résolveur est donc à fonctionnement mixte : absolu sur chaque pas polaire, relatif (incrémental) d'un pas polaire à l'autre. Avec 32 dents sur chaque couronne et le résolveur synchrodigital on obtient la précision voulue. L'avantage de ce principe réside dans la possibilité d'avoir des entrefers relativement grands (0,25 - 0,3 mm) compatibles avec la souplesse du palier magnétique.

Le positionnement du miroir 6 à la valeur de consigne demandée est réalisé par un bloc d'asservissement schématisé en 8A à la figure 10, dont les entrées sont les informations du résolveur angulaire et la consigne de balayage, la sortie étant un signal de commande α.

La commande proprement dite du moteur de balayage (voir bloc 8B de la figure 12) se fait à l'aide d'un amplificateur de courant de linéarité et de distorsion de croisement compatibles avec les performances requises. Celui-ci reçoit en entrée la commande analogique α et délivre un courant de signe et d'amplitude proportionnel au couple nécessaire à l'asservissement du moteur balayage.

Son alimentation s'effectue si possible directement à partir de la tension non régulée d'un convertisseur 15 relié à un bus d'alimentation par un élément 16 de filtrage et de protection.

Pour assurer une commande en basculement de l'arbre, on peut prévoir de petites bobines disposées autour de noyaux disposés au moins approximativement axialement en regard d'une partie rotorique. Ces bobines étant disposées de part et d'autre axialement de cette partie rotorique, en des zones diamétralement opposées à l'axe autour duquel on veut pouvoir provoquer un basculement. La commande en basculement se fait alors par activation de deux telles bobines disposées de part et d'autre à la fois de cette partie rotorique et de l'axe de celle-ci, en sorte d'attirer ce rotor, en une zone dans un sens axial et dans une zone diamétralement opposée dans le sens axial opposé, ce qui provoque un couple transversal sur l'arbre. On profite ici de ce que le palier magnétique a une raideur positive en basculement.

Toutefois, de manière préférée, on profite ici de la présence de deux paliers magnétiques pour obtenir un basculement en déplaçant tout simplement la position de consigne de l'un au moins des deux paliers, voire les positions de consigne de l'arbre dans des sens radiaux opposés pour les deux paliers, ce qui induit un couple.

Ainsi par exemple, on dispose les paliers 7 et 7' en sorte que leurs axes transversaux asservis soient parallèles, et on agit sur les bobines des paliers agissant parallèlement à une même direction. En fait, un basculement est obtenu dès lors qu'on déplace la consigne pour une seule paire de bobines dans un seul palier.

Ce basculement est contrôlé par l'électronique d'asservissement, schématisée en 7A à la figure 10, pilotée à partir de la consigne de basculement β.

Le dispositif de verrouillage 10 est représenté aux figures 5 à 9.

Ce dispositif 11 comporte trois pinces 60 munies chacune d'un patin de serrage 61 adapté, avec les patins 61 des autres pinces, à enserrer l'arbre 5. De manière préférée, ainsi que cela ressort de la figure 1, les patins rentrent dans une gorge circonférentielle de l'arbre dont les flancs permettent ainsi un maintien axial de l'arbre dans un sens au moins (plus généralement il peut suffire de quelques portées axiales pour les tranches des patins).

Ces pinces 60 sont, en des zones 62 décalées aussi bien radialement que circonférentiellement décalées vis à vis des patins 61, articulées sur la partie statorique de l'ensemble du dispositif, à l'aide de pions axiaux 63.

Ces pinces 60 sont logées dans une fente transversale d'une bague 65 (voir aussi la figure 1) adaptée à tourner autour de l'axe X-X avec un débattement limité, par exemple 60°.

Chacune des pinces comporte une lumière 66 dont les bords radialement interne 67 et externe 67', qui ne sont pas centrés sur l'axe X-X, forment des rampes pour un téton axial 68 solidaire de la bague et traversant cette lumière. De manière préférée, ces tétons 68 sont munis de roulements 68A, ce qui minimise les frottements avec ces rampes. Chaque lumière 66 comporte une première extrémité circonférentielle 69 proche de l'articulation 63 où le bord 67 est à distance minimale de l'axe de son patin 61 et une seconde extrémité circonférentielle 70 éloignée de l'articulation 63, où le bord est à distance maximale de l'axe du patin.

Les trois tétons axiaux 68 sont positionnés dans la bague 65 au travers de sa fente en sorte d'être simultanément, soit aux premières extrémités circonférentielles 69 (configuration de déverrouillage), soit aux secondes extrémités circonférentielles 70 (configuration de verrouillage).

Cette bague 65 est rappelée en rotation de manière bistable passive au moyen d'éléments élastiques 75 (à base de ressorts) - voir ci-dessous - vers l'une ou l'autre des configurations de verrouillage ou de déverrouillage, garantissant ainsi, d'une part en configuration de déverrouillage, le maintien de cette configuration et, d'autre part, en configuration de verrouillage non seulement le maintien en configuration mais aussi l'effort appliqué par les patins sur l'arbre : en pratique, les lumières 66 sont dimensionnées en sorte que les patins de serrage viennent s'appliquer sur l'arbre avant que les tétons viennent en butée circonférentielle contre les secondes extrémités circonférentielles 70.

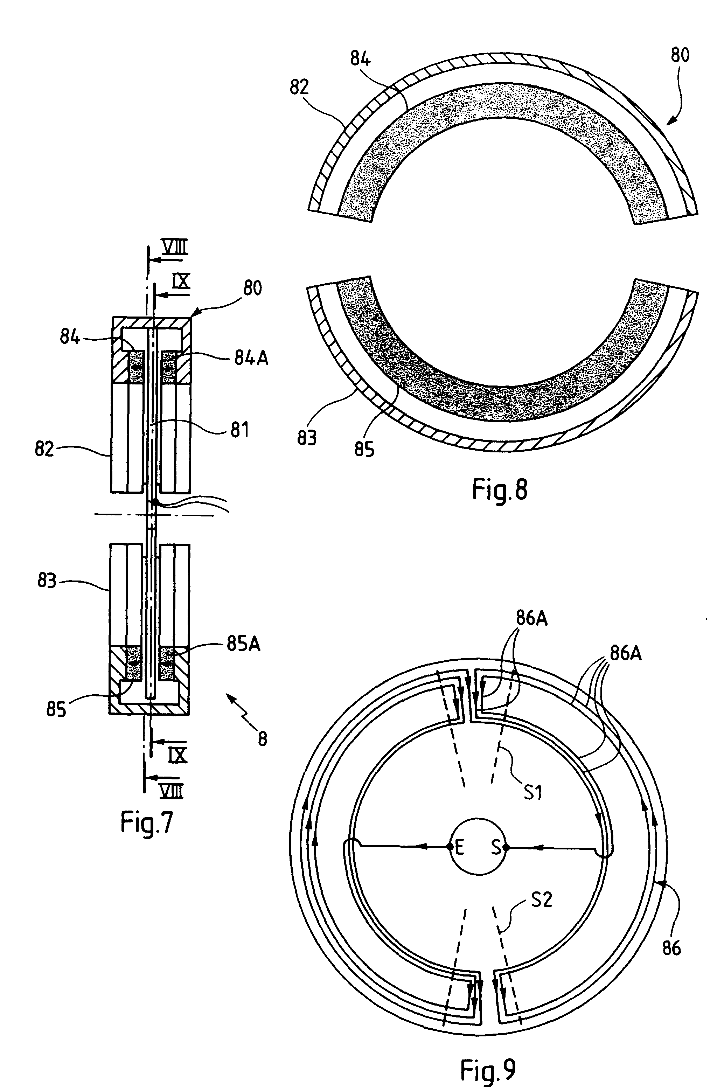

La bague 65 est manoeuvrée entre ses deux configurations, à l'encontre des éléments de rappel bistable passif précités, par un moteur 71 qui est avantageusement du type représenté aux figures 7 à 9.

Ce moteur 71 servant à manoeuvrer la bague 65 est un moteur couple à débattement limité à environ 120°, comportant une partie statorique ou inducteur 80 comportant une paire de pôles et une partie rotorique, aussi appelée induit 81, constituée d'un disque portant un ou plusieurs bobinages plans, de préférence réalisés chacun selon la technologie des circuits imprimés.

Plus précisément, ainsi que cela ressort des figures 4 et 5, l'inducteur 80 comporte une paire d'armatures magnétiques 82 et 83 disjointes, coiffant sans contact la périphérie de l'induit sur des secteurs angulaires inférieurs à 180° (par exemple 150°) et présentant des rebords formant des saillies axiales axialement en regard au travers de l'induit et définissant avec lui des entrefers radiaux. Ces armatures portent chacune au moins une portion de couronne à aimantation permanente 84 ou 85, respectivement, générant un flux magnétique se refermant axialement au travers de l'induit ; ces portions de couronne à aimantation permanente 84 ou 85 longent avantageusement les entrefers situés de part et d'autre de l'induit 81 et sont donc à aimantation axiale.

Dans l'exemple considéré ici, les flux magnétiques respectifs des deux armatures traversent l'induit dans des sens respectivement différents, et les portions de couronne 84 et 85 ont des sens d'aimantation axiale opposés.

Pour bien contrôler le flux magnétique au travers de l'induit, celui-ci est avantageusement interposé axialement entre deux portions de couronne à aimantation permanente 84 et 84A, ou 85 et 85A, pour chaque armature.

Le (ou les) bobinage(s) formé(s) sur l'induit 81 sont formés de brins en arcs de cercle 86A centrés sur l'axe X-X et raccordés par des tronçons ou brins radiaux 86B répartis en deux secteurs ou faisceaux S1 et S2 diamétralement opposés, par exemple d'amplitude angulaire d'environ 30°. Ces arcs de cercle 86A et ces tronçons radiaux 86B sont raccordés en sorte de former un bobinage 86 ayant une borne d'entrée E et une borne de sortie S.

Un tel bobinage 86 est représenté à la figure 6, étant précisé que, pour la clarté du dessin, on a exagéré l'écartement entre les tronçons 86B voisins, ou les arcs voisins 86A, et donc minimisé leur nombre. On notera que les arcs de cercle s'étendent sur près de 180° et que les brins radiaux de chacun des deux secteurs S1 et S2 sont, lorsqu'un courant est appliqué entre les bornes E et S, parcourus par des intensités de même sens. Les arcs de cercle définissent avec les tronçons radiaux des spires conformées en "banane" et emboîtées les unes dans les autres en sorte de former au moins un ensemble de spires, ici deux ensembles de spires disposées de part et d'autre d'un diamètre reliant les secteurs S1 et S2. L'un des tronçons radiaux (ici le tronçon médian du secteur S1) raccorde les deux ensembles de spires (qui constituent ainsi deux demi-bobinages).

Les sens de parcours du courant dans les secteurs sont choisis en sorte que, lorsque chacun des secteurs est pris en sandwich (sans contact pour ménager les entrefers axiaux précités) dans une armature respective, les flux d'aimantation permanente des deux armatures qui se referment au travers des secteurs induisent sur l'induit des couples de même sens.

On appréciera que le courant circulant dans les arcs de cercle n'induit aucun couple sur l'induit.

On appréciera qu'un tel principe se généralise à des moteurs à une phase et à n paires de pôles, du moment que le débattement voulu est inférieur à 2π/n , auquel cas on prévoit sur l'induit n paires de secteurs diamétralement opposés ; il peut y avoir un ou plusieurs bobinage(s) par couche de circuit imprimé, avec des spires en bananes s'étendant d'un secteur correspondant à une paire de pôles à un secteur adjacent s'étendant à une autre paire de pôles. Comme précédemment, l'amplitude de débattement est définie par la différence des amplitudes angulaires des armatures et des secteurs ou faisceaux de brins radiaux.

On notera à ce propos que l'amplitude des armatures est en fait celle des rebords de celle-ci et que ce n'est que de manière préférée que le fond des armatures a une même amplitude que ces rebords : en variante, ce fond radial pourrait être d'amplitude plus faible.

Le bobinage 86 peut être réalisé par dépôt de pistes, selon la technologie des circuits imprimés.

L'induit peut comporter plusieurs bobinages 86 ménagés en des couches de circuit imprimé axialement superposées et isolées électriquement les unes des autres, l'entrée de chaque bobinage étant toutefois connectée à la sortie du précédent, de manière à ce que ces bobinages soient en série, et les secteurs S1 et S2 des divers bobinages étant respectivement superposés axialement.

Ce moteur est commandé par une électronique schématisée en 10A à la figure 12.

On notera ici que la configuration du moteur 71 permet un faible encombrement axial et un couple important.

La bague 65, à laquelle est fixée l'induit du moteur 71, est de préférence reliée à la pièce annulaire magnétique 72 (ou à toute partie statorique) par une pluralité d'éléments élastiques 75 (par exemple quatre ou six) globalement radiaux et travaillant en compression, ici articulés, mobiles transversalement à l'axe entre deux configurations extrêmes dans lesquelles les pinces sont en configuration, soit de verrouillage, soit de déverrouillage ; ces éléments élastiques ont une configuration intermédiaire (d'équilibre instable) dans laquelle ils sont orientés radialement, grâce à quoi ce dispositif de verrouillage est rendu bistable de façon passive. On appréciera (voir ci-dessus) que ces éléments élastiques ont ici une double fonction puisqu'ils génèrent l'effort de serrage et assurent ce positionnement bistable.

Les éléments élastiques assurent ainsi :
- un verrouillage sûr (non déverrouillage sous vibrations),
- un déverrouillage sûr lui aussi,
- une réversibilité de la fonction verrouillage/déverrouillage.

Cette solution permet à la fois d'éviter le recours à une libération pyrotechnique, d'autoriser lors des essais au sol du système complet plusieurs verrouillages et déverrouillages et donc de tester le système de verrouillage lui-même. Ce système est donc prévu pour fonctionner plusieurs fois au sol, mais a priori une seule fois en vol pour le déverrouillage.

Du point de vue alimentation (voir la figure 12) la seule source d'énergie requise est la tension primaire du bus d'alimentation. En entrée, l'électronique d'alimentation comprend (bloc 16 déjà cité) les protections nécessaires afin de conserver l'intégrité de l'alimentation ainsi que les filtrages utiles.

A la suite, un (ou plusieurs) convertisseur(s) 15 assure(nt) la réalisation des tensions nécessaires à toute l'électronique du système de balayage ; il réalise l'isolement galvanique.

La référence 17 de la figure 10 représente le bloc d'interface et de protection de l'ensemble vis à vis du calculateur de bord (et réciproquement) auquel il est relié par un bus de commande et un bus de surveillance.

Il est possible de prévoir, en cas de besoin, un système de compensation dynamique visant à supprimer, ou du moins à diminuer fortement le couple de réaction transmis au satellite. Le principe de ce système résiderait dans la mise en rotation d'un volant d'inertie en sens inverse de celui du miroir. Diverses solutions sont possibles mais la seule qui apparait réalisable de façon fiable (quoi que pénalisante du point de vue masse) sans dégrader le niveau de précision angulaire sur le balayage consiste à installer dans l'axe du système principal un autre palier magnétique, entraîné en rotation par un moteur strictement identique à celui du système de balayage et couplé à un volant d'inertie. Aucune liaison mécanique (engrenages) ne relie alors le système principal à ce nouvel ensemble palier-moteur-volant d'inertie ; simplement les deux moteurs (balayage et compensation dynamique) sont branchés ensemble (en série pour avoir le même couple) en opposition : la commande du balayage actionne ainsi à la fois le système portant le miroir et le contre-volant d'inertie. Le couple résultant transmis au satellite est donc du niveau de la différence de couple entre les deux moteurs, soit du niveau de la différence entre les inductions des aimants du stator de chacun des deux moteurs.

Il va de soi que la description qui précède n'a été proposée qu'à titre d'exemple non limitatif et que de nombreuses variantes peuvent être proposées par l'homme de l'art sans sortir du cadre des revendications. Ainsi par exemple, on peut être amené à supprimer le résolveur, par exemple dans le cas où le rotor du moteur serait soumis à un rappel élastique vers une configuration neutre donnée par rapport au stator.

## Revendications

1. Dispositif de positionnement d'un corps tournant (4, 4') mobile autour d'un axe de rotation (X-X), avec un débattement limité en rotation, par rapport à un corps statorique comportant,
- deux paliers magnétiques (7, 7') décalés axialement, dans lesquels le corps tournant est engagé, et comportant chacun
* au moins une paire de bobines électromagnétiques (27) diamétralement opposées,
* des capteurs (13) de position ou de vitesse, et,
* une électronique d'asservissement en centrage radial, adaptée à recevoir une consigne de centrage variable transversalement à l'axe de rotation,
- des moyens de détection destinés à détecter l'inclinaison (β) du corps tournant par rapport à l'axe de rotation, comportant lesdits capteurs de position ou de vitesse des paliers magnétiques,
- un ensemble d'actionnement adapté à appliquer au corps tournant un couple de basculement transversalement à l'axe de rotation, comportant lesdites bobines électromagnétiques (27) et les capteurs, et
- un circuit d'asservissement en basculement ayant une entrée adaptée à recevoir une consigne d'inclinaison en basculement, des entrées connectées aux moyens de détection et des sorties connectées à l'ensemble d'actionnement, ce circuit d'asservissement comportant des moyens pour déterminer, en fonction de la consigne d'inclinaison, des consignes variables de centrage radial pour chacune des électroniques d'asservissement des paliers.

2. Dispositif de positionnement selon la revendication 1, caractérisé en ce que les deux paliers magnétiques ont des axes radialement actifs qui sont parallèles.

3. Dispositif de positionnement selon la revendication 1 ou la revendication 2, caractérisé en ce qu'il comporte un équipement électromagnétique disposé axialement entre les deux paliers.

4. Dispositif de positionnement selon la revendication 3, caractérisé en ce que cet équipement électromagnétique est un moteur (8) adapté à la commande en rotation du corps tournant.

5. Dispositif de positionnement selon la revendication 3, caractérisé en ce que cet équipement électromagnétique est un dispositif de verrouillage (10).

6. Dispositif de positionnement selon l'une quelconque des revendications 1 à 5, caractérisé en ce qu'une charge utile (6) est montée en porte-à-faux sur le corps tournant.

7. Dispositif de positionnement selon la revendication 6, caractérisé en ce que cette charge utile est un miroir de balayage.

## Claims

1. Device for positioning a rotary body (4, 4') mobile about a rotation axis (X-X) with limited range of movement in rotation, relative to a stator body including,
- two axially offset magnetic bearings (7, 7') in which the rotary body is engaged and each including:
* at least one pair of diametrally opposite electromagnetic coils (27),
* position or speed sensors (13), and
* radial centring control electronics adapted to receive a variable set point for centring transversely to the rotation axis,
- detector means adapted to detect the inclination (β) of the rotary body relative to the rotation axis, including said position or speed sensors of the magnetic bearings,
- an actuator system including said electromagnetic coils (27) and the sensors adapted to apply to the rotary body a tilting torque transverse to the rotation axis, and
- a tilt control circuit having an input adapted to receive a tilt set point, inputs connected to the detector means and outputs connected to the actuator system, this control circuit including means for determining variable radial centring set points for each of the bearing control electronics as a function of the tilt set point.

2. Positioning device according to claim 1 characterised in that the two magnetic bearings have parallel active radial axes.

3. Positioning device according to claim 1 or claim 2 characterised in that it includes an electromagnetic device disposed axially between the two bearings.

4. Positioning device according to claim 3 characterised in that the electromagnetic device is a motor (8) adapted to drive the rotary body in rotation.

5. Positioning device according to claim 3 characterised in that the electromagnetic device is a locking device (10).

6. Positioning device according to any one of claims 1 to 5 characterised in that a payload (6) is mounted cantilever fashion on the rotary body.

7. Positioning device according to claim 6 characterised in that this payload is a scanning mirror.

## Patentansprüche

1. Vorrichtung zum Positionieren eines Drehkörpers (4, 4'), der um eine Rotationsachse (X-X) beweglich ist, mit begrenztem Rotationsausschlag in bezug auf einen Statorkörper, aufweisend
- zwei axial versetzte Magnetlager (7, 7'), in denen der Drehkörper aufgenommen ist, wobei jedes
* mindestens ein Paar einander diametral gegenüberliegender elektromagnetischer Spulen (27),
* Positions- oder Geschwindigkeitsaufnehmer (13) und
* eine Regelungselektronik für die radiale Zentrierung aufweist, die dafür ausgelegt ist, eine Einstellgröße für die Zentrierung zu empfangen, die transversal zur Rotationsachse variabel ist,
- Detektierungsmittel, die dazu bestimmt sind, die Neigung (β) des Drehkörpers in bezug auf die Rotationsachse zu detektieren, welche die Positions- oder Geschwindigkeitsaufnehmer der Magnetlager aufweisen,
- eine Betätigungseinheit, die dafür ausgelegt ist, dem Drehkörper transversal zur Rotationsachse ein Kippmoment aufzuerlegen, welche die elektromagnetischen Spulen (27) und die Aufnehmer aufweist, und
- eine Regelschleife für das Kippen, welche einen Eingang, der dafür ausgelegt ist, eine Einstellgröße der Neigung beim Kippen aufzunehmen, mit den Detektierungsmitteln verbundene Eingänge und mit der Betätigungseinheit verbundene Ausgänge aufweist, wobei diese Regelschleife Mittel zum Bestimmen von variablen Einstellgrößen der radialen Zentrierung als Funktion der Neigungseinstellgröße für jede der Regelungselektroniken der Lager aufweist.

2. Positionierungsvorrichtung nach Anspruch 1, dadurch gekennzeichnet, daß die beiden Magnetlager radial aktive Achsen aufweisen, die parallel sind.

3. Positionierungsvorrichtung nach Anspruch 1 oder 2, dadurch gekennzeichnet, daß sie eine elektromagnetische Einrichtung aufweist, die axial zwischen den beiden Lagern angeordnet ist.

4. Positionierungsvorrichtung nach Anspruch 3, dadurch gekennzeichnet, daß diese elektromagnetische Einrichtung ein Motor (8) ist, der für den Rotationsantrieb des Drehkörpers ausgelegt ist.

5. Positionierungsvorrichtung nach Anspruch 3, dadurch gekennzeichnet, daß diese elektromagnetische Einrichtung eine Verriegelungsvorrichtung (10) ist.

6. Positionierungsvorrichtung nach mindestens einem der Ansprüche 1 bis 5, dadurch gekennzeichnet, daß eine Nutzlast (6) vorspringend auf dem Drehkörper angebracht ist.

7. Positionierungsvorrichtung nach Anspruch 6, dadurch gekennzeichnet, daß diese Nutzlast ein Ablenkspiegel ist.
